# EUROPEAN PATENT APPLICATION

(11) **EP 4 715 745 A2**
(43) Date of publication of application: **25.03.2026**
(21) Application number: 25203454.1
(22) Date of filing: 19.09.2025
(51) Int. Cl.: G06T 11/60

(54) **INTERACTION METHODS FOR IMAGE PROCESSING AND IMAGE PROCESSING METHODS**

(30) Priority: 19.09.2024 CN 202411312838
(71) Applicant: Alipay (Hangzhou) Information Technology Co., Ltd., Hangzhou, Zhejiang 310000 (CN)
(72) Inventor: LIU, Zichen, Hangzhou, Zhejiang, 310000 (CN); YU, Yue, Hangzhou, Zhejiang, 310000 (CN); WANG, Qiuyu, Hangzhou, Zhejiang, 310000 (CN); OUYANG, Hao, Hangzhou, Zhejiang, 310000 (CN); SHEN, Yujun, Hangzhou, Zhejiang, 310000 (CN)
(74) Representative: Fish & Richardson P.C.

(57) **Abstract**

This specification provides interaction methods for image processing and image processing methods corresponding to the interaction methods. First, a stroke that is used to represent a local area that needs to be changed and that is added by a user to a displayed first image by using an operable control is received, and then a prompt that is used to represent a modification target of the local area and that corresponds to the stroke is displayed. Then, a second image generated based on the stroke, the prompt, and the first image is displayed, where another part of the second image different from an area covered by the stroke is similar to the first image, and content represented by the modification target is correspondingly generated at a position at which the stroke is located in the second image. The user can draw, by adding a stroke to an image, content that the user wants to perform creative modification on the first image, and a device can identify the stroke of the user to generate the content needed by the user. As such, the user can perform efficient creative processing on an image by using simple operations even if the user is not familiar with image processing software.

## Description

### TECHNICAL FIELD

One or more embodiments of this specification relate to the field of image processing technologies, and in particular, to interaction methods for image processing and image processing methods.

### BACKGROUND

With the development of computer technologies, users' demands for image processing are gradually increasing. In the conventional technology, an image is usually processed by using image processing software.

The image processing software usually has functions of adjusting an overall color tone of an image (for example, changing the overall color tone of the image by applying a filter), fine-tuning a local part of an image (for example, refining facial features), etc. If creative processing is to be performed on an image by using the image processing software in the conventional technology, complex operations need to be performed, causing inconvenience. For example, individualized creation content is added to an original image, unwanted parts of the original image are removed, and colors of some objects in the original image are changed. The processing needs to be implemented by using complex operations.

### SUMMARY

In view of this, one or more embodiments of this specification provide interaction methods for image processing and image processing methods.

According to a first aspect of one or more embodiments of this specification, an interaction method for image processing is proposed, including: receiving a stroke added by a user to a displayed first image by using an operable control, where the stroke is used to represent a local area that needs to be changed in the first image; displaying a prompt corresponding to the stroke, where the prompt represents a modification target of the local area; and generating a second image based on the prompt, the stroke, and the first image, and displaying the second image, where the second image presents the modification target in the local area and is the same as or similar to the first image in a remaining area.

According to a second aspect of one or more embodiments of this specification, an image processing method is proposed, including: obtaining editing data input by a user for a first image, where the editing data are used to represent a local area that needs to be changed in the first image; determining a prompt corresponding to the editing data, where the prompt represents a modification target of the local area; and generating a second image based on the prompt, the editing data, and the first image, where the second image presents the modification target in the local area and is the same as or similar to the first image in a remaining area.

According to a third aspect of one or more embodiments of this specification, an interaction apparatus for image processing is provided, including: a stroke receiving module, configured to receive a stroke added by a user to a displayed first image by using an operable control, where the stroke is used to represent a local area that needs to be changed in the first image; a prompt display module, configured to display a prompt corresponding to the stroke, where the prompt represents a modification target of the local area; and an image display module, configured to generate a second image based on the prompt, the stroke, and the first image, and display the second image, where the second image presents the modification target in the local area and is the same as or similar to the first image in a remaining area.

According to a fourth aspect of one or more embodiments of this specification, an image processing apparatus is provided, including: an editing data acquisition module, configured to obtain editing data input by a user for a first image, where the editing data are used to represent a local area that needs to be changed in the first image; a prompt determining module, configured to determine a prompt corresponding to the editing data, where the prompt represents a modification target of the local area; and an image generation module, configured to generate a second image based on the prompt, the editing data, and the first image, where the second image presents the modification target in the local area and is the same as or similar to the first image in a remaining area.

According to a fifth aspect of one or more embodiments of this specification, a computer-readable storage medium is provided. The computer-readable storage medium stores computer instructions, and the instructions are executed by a processor to implement the interaction method for image processing or the image processing method described above.

According to a sixth aspect of one or more embodiments of this specification, a computer device is provided, where the computer device includes: a processor; and a storage, configured to store processor-executable instructions.

The processor runs the executable instructions to implement the interaction method for image processing or the image processing method described above.

According to a seventh aspect of one or more embodiments of this specification, a computer program product is provided. The computer program product is executed by a processor to implement the interaction method for image processing or the image processing method described above.

This specification provides interaction methods for image processing and image processing methods corresponding to the interaction methods. First, a stroke that is used to represent a local area that needs to be changed and that is added by a user to a displayed first image by using an operable control is received, and then a prompt that is used to represent a modification target of the local area and that corresponds to the stroke is displayed. Then, a second image generated based on the stroke, the prompt, and the first image is displayed, where another part of the second image different from an area covered by the stroke is similar to the first image, and content represented by the modification target is correspondingly generated at a position at which the stroke is located in the second image. The user can draw, by adding a stroke to an image, content that the user wants to perform creative modification on the first image, and a device can identify the stroke of the user to generate the content needed by the user. As such, the user can perform efficient creative processing on an image by using simple operations even if the user is not familiar with image processing software.

It should be understood that the above-mentioned general descriptions and the following detailed descriptions are merely used as examples and for explanation, and are not intended to limit this specification.

### BRIEF DESCRIPTION OF DRAWINGS

The accompanying drawings here, which are incorporated in and form a part of this specification, illustrate some embodiments consistent with this specification and, together with this specification, serve to explain the principles of this specification.
FIG. 1 is a flowchart illustrating an interaction method for image processing, according to some example embodiments of this specification.
FIG. 2 is a schematic diagram illustrating a first image with editing data and a corresponding second image, according to some embodiments of this specification.
FIG. 3 is a schematic diagram illustrating another first image with editing data and a corresponding second image, according to some embodiments of this specification.
FIG. 4 is a schematic diagram illustrating a first interface, according to this specification.
FIG. 5 is a flowchart illustrating an image processing method, according to some example embodiments of this specification.
FIG. 6 is a schematic diagram illustrating an edge map, according to this specification.
FIG. 7 is a schematic diagram illustrating a mask, according to this specification.
FIG. 8 is a schematic diagram illustrating an image processing procedure, according to this specification.
FIG. 9 is a block diagram illustrating an interaction apparatus for image processing, according to some example embodiments of this specification.
FIG. 10 is a block diagram illustrating an image processing apparatus, according to some example embodiments of this specification.
FIG. 11 is a diagram illustrating a hardware structure of a computer device, according to some example embodiments of this specification.

### DETAILED DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that, in some other embodiments, the steps of the corresponding method are not necessarily performed in the order shown and described in this specification. In some other embodiments, the method can include more or less steps than those described in this specification. In addition, a single step described in this specification may be broken down into a plurality of steps for description in some other embodiments, and a plurality of steps described in this specification may be combined into a single step for description in some other embodiments.

To resolve a problem that image processing in the conventional technology is inconvenient for users, this specification proposes an interaction method for image processing applied to a front end and an image processing method at a back end corresponding to the interaction method. First, a stroke that is used to represent a local area that needs to be changed and that is added by a user to a displayed first image by using an operable control is received, and then a prompt that is used to represent a modification target of the local area and that corresponds to the stroke is displayed. Then, a second image generated based on the stroke, the prompt, and the first image is displayed, where another part of the second image different from an area covered by the stroke is similar to the first image, and content represented by the modification target is correspondingly generated at a position at which the stroke is located in the second image.

The user can draw, by adding a stroke to an image, content that the user wants to perform creative modification on the first image, and a device can identify the stroke of the user to generate the content needed by the user. As such, the user can perform efficient creative processing on an image by using simple operations even if the user is not familiar with image processing software, so that the user can create more individualized and creative works at a low cost.

The following describes the method shown in this specification by using some specific embodiments. This specification shows an interaction method for image processing applied to a front end and an image processing method applied to a back end. The interaction method for image processing is first described below through interaction between the front end and a user. The two methods in this specification are mainly used to perform creative processing on an image. The creative processing can include changing a local area in an image, for example, adding an object to the image. The creative processing can further include deleting a local area in the image, for example, deleting a person in an image background. In addition, the creative processing can include changing a color of a part of an area in an image, for example, changing a color of an object in the image.

The interaction method for image processing applied to the front end can be performed by a terminal that can interact with a user, such as a mobile phone, a computer, or a tablet computer. The image processing method applied to the back end can be performed jointly by a terminal and a server, or can be performed individually by a server, or can be performed individually by a terminal. Implementations are not limited in this specification.

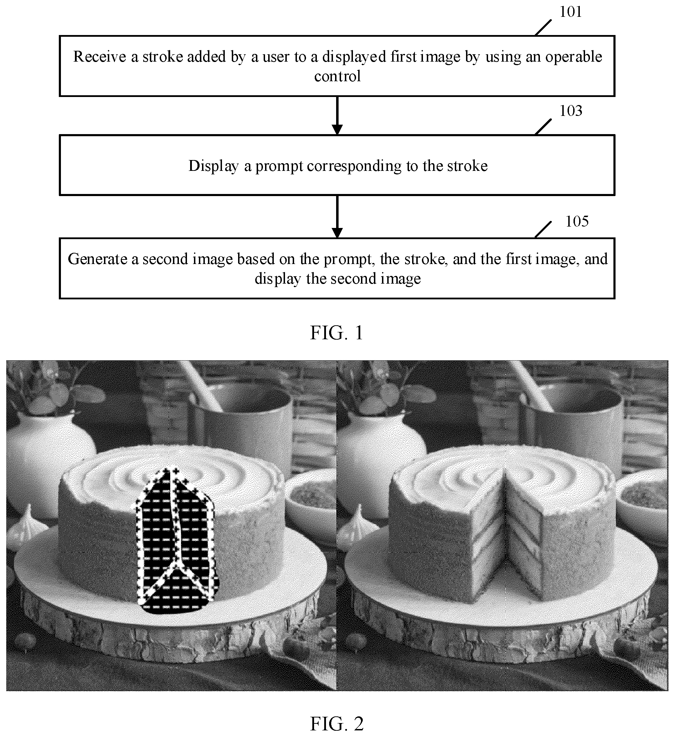

As shown in FIG. 1, the interaction method for image processing shown in this specification includes the following steps.

Step 101: Receive a stroke added by a user to a displayed first image by using an operable control.

The stroke is used to represent a local area that needs to be (e.g., should be) changed in the first image.

Specifically, the user can perform simple drawing on the first image by using the operable control to describe the local area that needs to be changed. Correspondingly, the stroke can be any mark drawn on the first image by the user by using the operable control, and an expression form can include a line, area drawing, etc.

The operable control can be a control that can add the stroke. The first image is an image to be processed. The first image can be an image uploaded by the user and received before step 101 is performed, or can be a pre-stored example image selected by the user in a database.

The first image can be displayed in a first display interface, so that the user processes the first image. The first display interface can be an interface of image processing software or an image processing page in a form of a web page. The first display interface can alternatively be an interface in another form. For example, the method can be implemented by using a browser plug-in. For example, on any web page displayed by a browser, an image selected by the user can be used as the first image, the stroke added by the user to the first image is received, and a corresponding second image is generated, so that the user can more flexibly achieve an image processing target.

The stroke can include at least one of a first stroke, a second stroke, and a third stroke. The first stroke is used to outline an area contour, the second stroke is used to draw an area in which content needs to be changed, and the third stroke is used to draw an area in which a color needs to be changed, and present a color that needs to be modified to. The user can select, based on needs, to use one of or a combination of more of the above-mentioned strokes to express a modification intention of the user to the first image.

In some embodiments, a combination of the first stroke and the second stroke can be used to indicate to modify content in a local area. Specifically, when the user wants to change content in a local area of an image, the user can use the first stroke to outline the local area that needs to be changed, or a contour of an object that needs to be added, and use the second stroke to draw an area in which content needs to be changed.

For example, as shown in FIG. 2, a graph on a left side of FIG. 2 shows strokes added by the user to an image of a cake. The user wants to modify, by using the added strokes, an entire cake shown in the first image to a cake with one corner cut off. White strokes in FIG. 2 are first strokes, and the first strokes depict a contour of content that the user wants to change, that is, a contour of a cut section of the corner cut off from the cake. Black strokes in FIG. 2 are second strokes, and cover an area in which content needs to be changed. A second image shown in a graph on a right side of FIG. 2 can be obtained based on the strokes in the graph on the left side of FIG. 2.

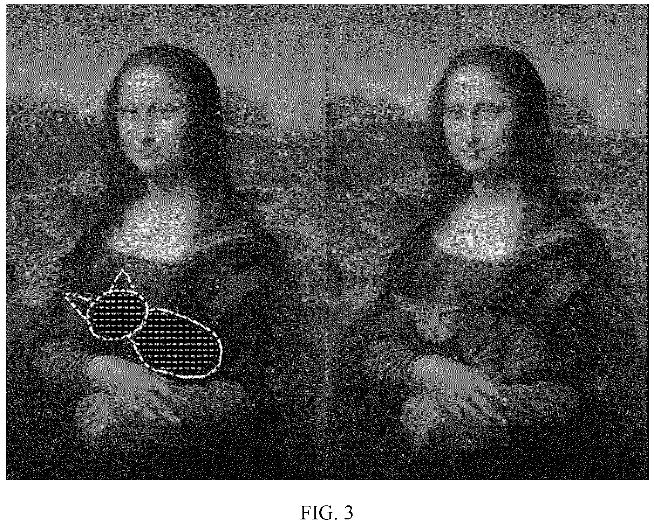

For another example, a graph on a left side of FIG. 3 shows strokes added by the user to an image of Mona Lisa. The user wants to modify the image of Mona Lisa to an image of Mona Lisa holding a cat. In FIG. 3, white strokes are first strokes, and outline a shape of the cake. Black strokes are second strokes, and cover a part of an area that need to be changed to the cat. A graph on a right side of FIG. 3 can be generated based on the graph on the left side of FIG. 3.

In some other embodiments, only the second stroke can be used to indicate to delete a local area. Specifically, when the user wants to delete a local area in an image, different from the case that the user wants to change a local area in an image, in this case, an area that needs to be changed does not need to be outlined by using the first stroke, and the area that needs to be deleted can be covered only by using the second stroke. As such, a device can distinguish between intentions of the user. For example, in FIG. 2, a black sector area without a contour line is an area covered only by using the second stroke, and is an area that the user wants to delete. If the user wants to delete a vase in a background of the left graph in FIG. 2, the vase can be covered by using the second stroke.

In still other embodiments, the third stroke can be used to indicate to change a color in a local area. When the user wants to change a color in a local area in an image, the user can cover, by using the third stroke, the local area in which the user wants to change the color. A difference between the third stroke and the first stroke or the second stroke is that a color cannot be selected for the first stroke and the second stroke, and the third stroke can be selected as a color that needs to be changed to. For example, if the user wants to change the vase in the background of the left graph in FIG. 2 to pink, the user can first select the third stroke as pink, and cover an area in which the vase is located by using the third stroke in pink. The third stroke can be used individually, that is, only the third stroke of a target color is used to draw an area, to indicate to modify the area to the target color. Alternatively, in some cases in which detailed outlining needs to be performed, the third stroke can be used in combination with the first stroke. For example, the first stroke is first used to outline a contour, and then the third stroke of a target color is used to draw an area in the contour.

There can be more combinations of the above-mentioned strokes based on needs. For example, the user can outline a plurality of sub-areas by using the first stroke, where some sub-areas are drawn by using the second stroke, and some sub-areas are drawn by using the third stroke. In addition, a sub-area without a contour line (formed by the first stroke) is drawn by using the second stroke.

In addition, when the stroke includes at least one of the first stroke, the second stroke, and the third stroke, in addition to displaying the first image, the first display interface can further display a control icon of the operable control. Specifically, the first display interface further displays the control icon of the operable control, including a first control icon corresponding to the first stroke, a second control icon corresponding to the second stroke, and a third control icon corresponding to the third stroke.

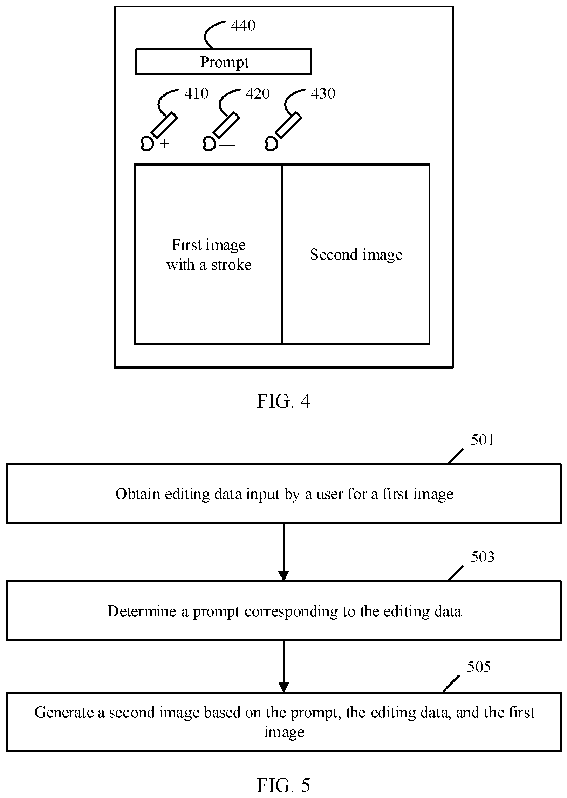

For example, as shown in FIG. 4, FIG. 4 is a possible schematic diagram illustrating a first interface. In FIG. 4, 410 is the first control icon, 420 is the second control icon, and 430 is the third control icon. In addition to the control icons shown in FIG. 4, the first interface can further include a control icon used to adjust thickness of a stroke, a control icon used to erase a stroke, etc. Examples in FIG. 4 do not represent a limitation on this specification.

The above-mentioned three strokes are merely a possible specific implementation, and do not represent a limitation on this application.

Step 103: Display a prompt corresponding to the stroke.

The prompt represents a modification target of the local area.

The prompt can be used to indicate specific content (that is, the modification target) that the user wants to modify in the local area. For example, in the scenario shown in FIG. 2, the prompt can be a cake. In the scenario shown in FIG. 3, the prompt can be a cat. In a scenario in which a color in the local area is to be changed, the prompt can be a text or an identifier (such as a color number) that needs to be changed to.

A specific method for obtaining the prompt can be obtaining the prompt input by the user.

In addition, to improve editing efficiency and save user time, so that a processed image can be obtained by using fewer operations after the user inputs the stroke, the prompt can be automatically generated by a device interacting with the user or by a background server based on the stroke input by the user and the first image. As such, the device can identify the stroke of the user to predict content that the user wants to draw, and the user does not need to manually fill in the prompt, thereby improving editing efficiency. A specific method for generating the prompt is described in detail in the image processing method corresponding to the back end, and details are omitted here for simplicity.

In other words, in step 103, a predicted first prompt is displayed. Correspondingly, a second image in the subsequent step can be generated based on the first prompt. The first prompt predicted by the device is displayed to the user, so that the user can determine whether the generated prompt is accurate. In addition, the user can further determine whether the first prompt is accurate. When the user determines that the first prompt is accurate, step 105 is performed to generate the second image based on the first prompt.

In addition, in some cases, due to limited drawing skills of the user, the device may be unable to generate an accurate prompt based on the stroke of the user. To ensure accuracy of a generated result, a control for modifying the displayed first prompt can be provided for the user, so that when the predicted first prompt is inaccurate, a generation effect of the second image is still not affected.

In other words, step 103 can include: displaying a predicted first prompt; and displaying a modified second prompt in response to a modification operation performed by the user on the first prompt. Correspondingly, the second image in the subsequent step can be generated based on the second prompt.

In addition, the first interface mentioned above can further include a text box, and the text box can be used to display the prompt. When the user can modify the displayed first prompt, the text box can be further used to receive the second prompt input by the user. As shown in FIG. 4, 440 in FIG. 4 is the text box.

Step 105: Generate a second image based on the prompt, the stroke, and the first image, and display the second image.

The second image presents the modification target in the local area and is the same as or similar to the first image in a remaining area.

The second image is an image that the user wants to obtain by performing creative processing on the first image. During processing, only an area covered by the stroke is processed corresponding to the modification target, for example, an object is deleted, creative modification is performed, and colors in some areas are changed. The remaining area is the same as or similar to the first image. The "same as or similar to" here means that, from a perspective of observation by naked eyes of an ordinary user, the second image and the first image are basically the same in an area other than the local area; and from an image processing perspective, it can be considered that a similarity between the two images exceeds a predetermined threshold in the remaining area.

The second image can be displayed in the first interface. As shown in FIG. 4, the second image can be displayed on a side of the first image with a stroke, so that the user can visually see a generation result of the second image. In addition, an operable control for downloading the second image can be further provided for the user.

A specific implementation of step 105 is described in detail below, and details are omitted here for simplicity.

After the method correspondingly used for the front end is briefly described, the image processing method applied to the back end is described below by using a flowchart shown in FIG. 5. As shown in FIG. 5, the image processing method includes the following steps.

Step 501: Obtain editing data input by a user for a first image.

The editing data are used to represent a local area that needs to be (e.g., should be) changed in the first image.

Step 501 corresponds to step 101. The front end obtains a stroke input by the user, and can send the stroke to the back end, so that the back end obtains the editing data for the first image. The editing data refer to the stroke obtained in step 101. The editing data input by the user can be obtained through step 501, to further complete processing of the first image.

Step 503: Determine a prompt corresponding to the editing data.

The prompt represents a modification target of the local area.

Step 503 corresponds to step 103. The back end determines the prompt corresponding to the editing data, and sends the prompt to the front end, and the front end displays the determined prompt.

A specific implementation of step 503 is similar to that described in step 103, and details are omitted here for simplicity. How to automatically generate the prompt based on the first image and the editing data is described here. Some embodiments are used for description below. The following embodiments do not represent a limitation on this specification.

In an optional implementation, an implementation of step 503 can be: inputting the first image and the editing data to a multimodal large model to obtain a predicted prompt for confirmation or modification by the user. The multimodal large model can be a multimodal large model that is pre-trained and that is configured to generate, based on the input image and the input editing data, a corresponding prompt used to represent the modification target.

Step 505: Generate a second image based on the prompt, the editing data, and the first image, where the second image presents the modification target in the local area and is the same as or similar to the first image in a remaining area.

Step 505 corresponds to step 101. After generating, based on the obtained prompt, the editing data, and the first image, the second image that satisfies a need, the back end can transmit the second image to the front end, and the front end displays the second image.

Some specific embodiments are used below to describe how the back end specifically performs step 505. The following embodiments do not represent a limitation on this specification. Step 505 can also be directly using an end-to-end model to input the first image, the prompt, and the editing data, and output a second image.

In the embodiments, step 505 specifically includes the following steps.

Step 5051: Generate an edge map based on the first image and the editing data.

A shape of a local area that needs to be changed and a relationship between the local area and other lines around the local area in the first image can be obtained by using the edge map, so that the shape of the local area that needs to be changed can be identified in the following, and a more realistic image can be generated based on the relationship between the local area and the other lines around the local area.

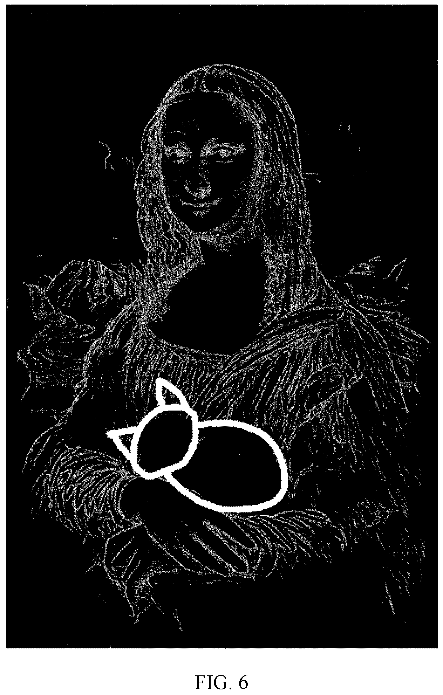

An edge map refers to edge information extracted from an image, and the edge information is an area in which grayscale changes rapidly in the image. A contour of an object can be identified by using the edge map. In the scenario shown in FIG. 3, a corresponding edge map is shown in FIG. 6.

A specific method for extracting the edge map can be: inputting the first image and the editing data to a pre-trained edge extraction model to obtain the edge map, where the edge extraction model uses a convolutional neural network (CNN) as a model backbone. As such, a relatively good edge map extraction effect can be achieved.

In addition, a stroke in editing data is usually relatively simple, and a contour curve can be directly extracted. For example, the first stroke mentioned above can be used as a contour line in the edge map. To facilitate extraction, an edge map of the first image can be first extracted, and then the editing data are used to cover a corresponding position of the edge map corresponding to the first image to obtain the edge map.

When the editing data are used for coverage, if at least one of the first stroke, the second stroke, and the third stroke mentioned above exists, the first stroke can be used as a contour line in the edge map because the first stroke outlines a contour line of an object that needs to be changed. For the second stroke, content covered by the second stroke is content that needs to be changed or deleted, the part of content needs to be regenerated based on the following steps, and an area covered by the second stroke can be reset to black in the edge map. For the third stroke, content covered by the third stroke is a local area in which a color needs to be changed, and an edge of the area covered by the third stroke can be added as a contour line to the edge map corresponding to the first image.

In the edge map, a contour line corresponding to a stroke and a contour line corresponding to another part can be represented by using different lines, for example, lines of different thicknesses. As such, the following image generation model can simply identify which part needs to be changed.

In addition, in some other implementations, in the edge map, a contour line corresponding to a stroke and a contour line corresponding to another part can be represented by using the same line. A form of the contour line is described in detail below with reference to a specific implementation of step 5052.

Step 5052: Encode the first image to obtain encoding information of the first image.

The first image is encoded through step 5052, so that the model can obtain information about the original image, to ensure that a part of the second image other than the area covered by the editing data is similar to the first image.

In addition, the encoding information is obtained through step 5052, which can further enable the image generation model to obtain a style of the original image, to ensure that content generated at a position corresponding to the editing data in the second image adapts to an overall style. For example, the cake in the image shown in FIG. 2 is of a realistic style, and the cake in the corresponding second image is also of the realistic style. The image shown in FIG. 3 is of an oil painting style, and the cat correspondingly generated should also be of the oil painting style.

In an optional implementation, because an image at the position corresponding to the editing data needs to be regenerated, it is not necessary to ensure that the part is similar to a corresponding part in the first image, and therefore, the part may not be encoded. To be specific, step 5052 includes: extracting a remaining area other than the local area from the first image; and encoding the remaining area by using an encoder, to obtain the encoding information of the first image. As such, encoding can be performed more efficiently.

The encoder can be a variational auto-encoder (VAE).

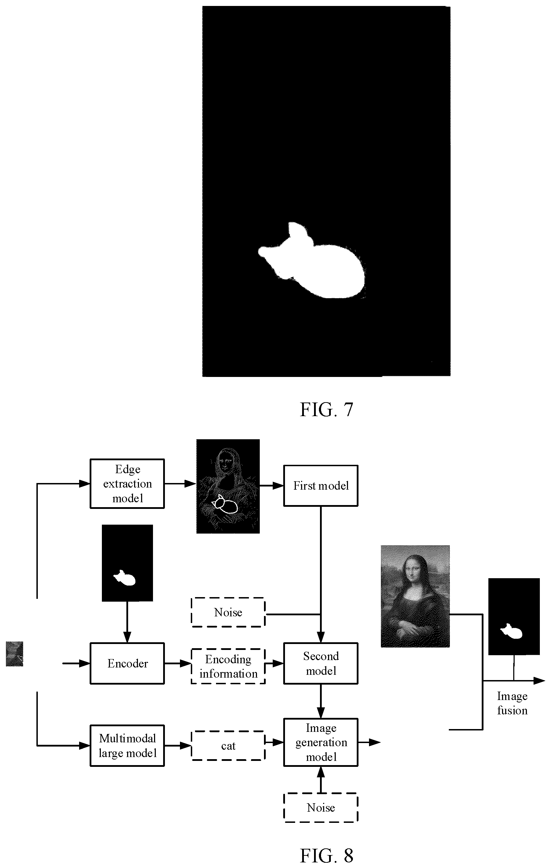

In specific implementation, a mask can be generated based on the editing data. The mask differentiates a local area covered by the editing data from an other area. For example, in the mask, the local area covered by the editing data can be white, and the other area is black. For example, in the scenario shown in FIG. 3, a mask shown in FIG. 7 can be generated. Further, the mask can be input to the encoder together with the first image, and the encoder encodes only a black part in the mask to obtain the encoding information.

In the above-mentioned case, in the edge map obtained in step 5051, a contour line corresponding to the editing data can be the same as a contour line corresponding to the first image. Because the encoding information includes only an other area different from the editing data, it can be determined, by using the encoding information and the edge map, which part of the edge map needs to be regenerated and which part of the edge map needs to be kept unchanged.

Step 5053: Input the edge map, the encoding information, and the prompt to an image generation model, and obtain the second image based on an output image.

After the edge map, the encoding information, and the prompt are obtained, the above-mentioned content can be input to the image generation model, so that the image generation model can generate the second image.

In some cases, some image generation models cannot receive data in a plurality of forms. For example, the Stable Diffusion model can receive only a prompt in a text form. Therefore, to enable the image generation model to normally process data in a plurality of forms, step 5053 can perform the following operations: inputting the edge map to a first model to obtain first data for performing graphic encoding on the edge map; inputting the first data and the encoding information to a second model to obtain second data converted into text embedded space; and inputting the second data and the prompt to an image generation model.

Specifically, the edge map can be encoded by using the first model, to obtain the first data. Through the second model, information about the edge map corresponding to the first data and the encoding information of the first image can be summarized, and the summarized information is converted into the text embedded space to obtain the second data. Therefore, some image generation models that can only process a prompt can generate a needed model based on the second data. The second model can summarize the edge map and the encoding information. Correspondingly, the image generation model can obtain the following by using the second data: a shape of a local area that needs to be changed, a relationship between the local area and another surrounding object, a style of the local area that needs to be changed, and information about the original first image.

In the above-mentioned method, an entire image is regenerated instead of only redrawing the local area covered by the editing data, so that content generated in the local area covered by the editing data and surrounding content are more logically matched. For example, in the scenario shown in FIG. 3, a cat sitting on the Mona Lisa's arms can be generated based on a relationship between a local area in the edge map and a surrounding contour line. If only the local area is redrawn, a cat floating on the Mona Lisa' arms may be generated. As a result, feet of the generated cat are not in contact with Mona Lisa, and a generated image does not conform to logic and is not realistic.

In addition, after the output is obtained based on the image generation model, the image generated by the image generation model may have a lower definition than the first image. To ensure that a part that the user does not want to modify is more similar to an original image, and improve user experience, the obtaining the second image based on an output image can include: extracting a first sub-image in the local area from the output image; and fusing the first sub-image with a second sub-image in the first image other than the local area, to obtain the second image.

In specific implementation, fusion can be performed by using the mask shown above, and the local area corresponding to the editing data and the other area are distinguished by using the mask. Therefore, the local area corresponding to the editing data are based on the image generated by the image generation model, the other area is based on the first image. As such, the second image obtained through fusion has a definition almost the same as that of the first image, thereby improving user experience.

Using the scenario shown in FIG. 3 as an example, a specific implementation process of step 505 shown above can be shown in FIG. 8. In FIG. 3, a solid-line box represents a model used in each processing step, and a dashed-line box represents data generated in the processing step.

First, the first image with the editing data is input to the edge extraction model to obtain the edge map, and the edge map is input to the first model. By using the edge map, the image generation model can be controlled to generate content that the user wants to generate.

Then, the first image with the editing data and the automatically generated mask around the user's stroke are input to the encoder to obtain the encoding information (vector) of the first image. The encoding information is input to the second model, and output data of the first model is also input to the second model. Because some image generation models generate an image by using noise, to enable output data of the second model to match input of the image generation model, noise can also be input to the second model here. It can be ensured, by using the encoding information, that content generated corresponding to the editing data is the same as a style of the first image and is the same as the first image other than the position of the editing data.

Further, the first image with the editing data is input to the multimodal large model to predict content that the user wants to generate, and a predicted prompt and noise are input to the image generation model to obtain the second image. If the image generation model does not need to generate an image by using noise, the noise may not be input to the image generation model herein. The predicted prompt can be used to generate the image.

Finally, the image generated by the image generation model is fused with the first image based on the mask. During fusion, the local area covered by the editing data is based on the generated image, and a remaining area is based on the first image. As such, when the generated image has a lower definition than the first image, a definition of the second image can still be ensured.

Corresponding to some embodiments of the above-described method, this specification further provides some embodiments of an apparatus and a terminal to which the apparatus is applied.

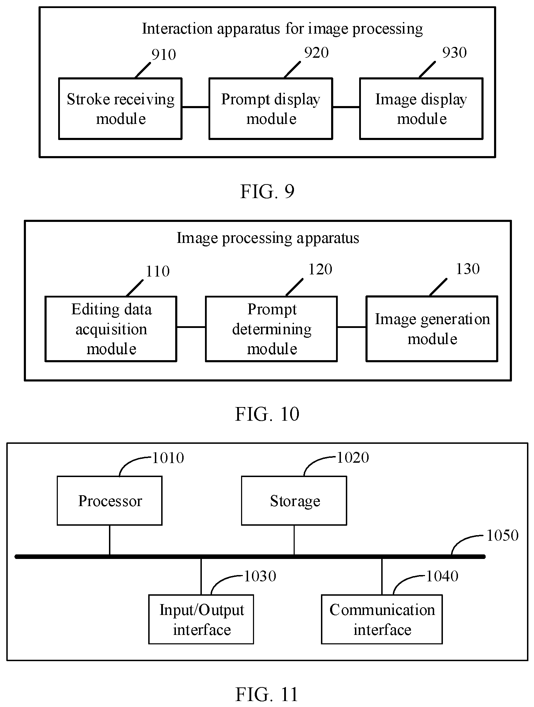

As shown in FIG. 9, FIG. 9 is a block diagram illustrating an interaction apparatus for image processing, according to some example embodiments of this specification. The apparatus includes: a stroke receiving module 910, configured to receive a stroke added by a user to a displayed first image by using an operable control, where the stroke is used to represent a local area that needs to be changed in the first image; a prompt display module 920, configured to display a prompt corresponding to the stroke, where the prompt represents a modification target of the local area; and an image display module 930, configured to generate a second image based on the prompt, the stroke, and the first image, and display the second image, where the second image presents the modification target in the local area and is the same as or similar to the first image in a remaining area.

In an optional implementation, the prompt display module 920 is specifically configured to display a predicted first prompt, where the second image is generated based on the first prompt.

In an optional implementation, the prompt display module 920 is specifically configured to display a predicted first prompt, and display a modified second prompt in response to a modification operation performed by the user on the first prompt, where the second image is generated based on the second prompt.

In an optional implementation, the stroke includes at least one of a first stroke, a second stroke, and a third stroke. The first stroke is used to outline an area contour, the second stroke is used to draw an area in which content needs to be changed, and the third stroke is used to draw an area in which a color needs to be changed, and present a color that needs to be modified to.

In an optional implementation, the first image is displayed in a first display interface, and the first display interface further displays a control icon of the operable control, including a first control icon corresponding to the first stroke, a second control icon corresponding to the second stroke, and a third control icon corresponding to the third stroke.

In an optional implementation, the first display interface further includes a text box, and the text box is used to display the prompt.

As shown in FIG. 10, FIG. 10 is a block diagram illustrating an image processing apparatus, according to some example embodiments of this specification. The apparatus includes: an editing data acquisition module 110, configured to obtain editing data input by a user for a first image, where the editing data are used to represent a local area that needs to be changed in the first image; a prompt determining module 120, configured to determine a prompt corresponding to the editing data, where the prompt represents a modification target of the local area; and an image generation module 130, configured to generate a second image based on the prompt, the editing data, and the first image, where the second image presents the modification target in the local area and is the same as or similar to the first image in a remaining area.

In an optional implementation, the prompt determining module 120 is specifically configured to input the first image and the editing data to a multimodal large model to obtain a predicted prompt for confirmation or modification by the user.

In an optional implementation, the image generation module 130 includes: an edge map generation submodule 1301, configured to generate an edge map based on the first image and the editing data; an encoding information acquisition submodule 1302, configured to encode the first image to obtain encoding information of the first image; and a second image generation submodule 1303, configured to input the edge map, the encoding information, and the prompt to an image generation model to obtain a second image based on an output image.

In an optional implementation, the edge map generation submodule 1301 is specifically configured to input the first image and the editing data to a pre-trained edge extraction model to obtain the edge map, where the edge extraction model uses a convolutional neural network (CNN) as a model backbone.

In an optional implementation, the encoding information acquisition submodule 1302 is specifically configured to extract a remaining area other than the local area from the first image, and encode the remaining area by using an encoder, to obtain the encoding information of the first image.

In an optional implementation, the second image generation submodule 1303 is specifically configured to input the edge map to a first model to obtain first data for performing graphic encoding on the edge map, input the first data and the encoding information to a second model to obtain second data converted into text embedded space, and input the second data and the prompt to an image generation model.

In an optional implementation, the second image generation submodule 1303 is specifically configured to extract a first sub-image in the local area from the output image, and fuse the first sub-image with a second sub-image in the first image other than the local area, to obtain the second image.

For details about implementation processes of functions and effects of the modules in the above-mentioned apparatus, references can be made to implementation processes of corresponding steps in the above-mentioned method. Details are omitted here for simplicity.

Because the apparatus embodiments basically correspond to the method embodiments, for related parts, references can be made to related descriptions in the method embodiments. The described apparatus embodiments are merely examples. The modules described as separate parts may or may not be physically separate, and parts displayed as modules may or may not be physical modules, that is, may be located in one position, or may be distributed on a plurality of network modules. Some or all of the modules can be selected based on actual needs to achieve the objectives of the solutions of this specification. A person of ordinary skill in the art can understand and implement the solutions without creative efforts.

As shown in FIG. 11, FIG. 11 is a diagram illustrating a hardware structure of a computer device. The device can include a processor 1010, a storage 1020, an input/output interface 1030, a communication interface 1040, and a bus 1050. The processor 1010, the storage 1020, the input/output interface 1030, and the communication interface 1040 are communicatively connected to each other in the device through the bus 1050.

The processor 1010 can be implemented in a form of a general-purpose central processing unit (CPU), a microprocessor, an application-specific integrated circuit (ASIC), one or more integrated circuits, etc., and is configured to execute a related program, to implement the technical solutions provided in some embodiments of this specification. The processor runs executable instructions to implement the above-mentioned method.

The storage 1020 configured to store processor-executable instructions can be implemented in a form of a read-only memory (ROM), a random access memory (RAM), a static storage device, a dynamic storage device, etc. The storage 1020 can store an operating system and another application program. When the technical solutions provided in some embodiments of this specification are implemented by software or firmware, related program code is stored in the storage 1020.

The input/output interface 1030 is configured to connect to an input/output module to input and output information. The input/output module can be configured in the device as a component, or can be externally connected to the device to provide corresponding functions. An input device can include a keyboard, a mouse, a touchscreen, a microphone, various sensors, etc., and an output device can include a display, a speaker, a vibrator, an indicator light, etc.

The communication interface 1040 is configured to connect to a communication module, to implement communication and interaction between the device and another device. The communication module can implement communication in a wired method (for example, a USB or a network cable), or in a wireless method (for example, a mobile network, WIFI, or Bluetooth).

The bus 1050 includes a path to transmit information between various components (for example, the processor 1010, the storage 1020, the input/output interface 1030, and the communication interface 1040) of the device.

It is worthwhile to note that, although only the processor 1010, the storage 1020, the input/output interface 1030, the communication interface 1040, and the bus 1050 are shown in the device, in a specific implementation process, the device can further include another component that is necessary for normal operation. In addition, a person skilled in the art can understand that the above-mentioned device can include only components needed for implementing the solutions in some embodiments of this specification, and does not need to include all the components shown in the figure.

Some embodiments of this specification further provide a computer program product. The computer program product is executed by a processor to implement the interaction method for image processing or the image processing method described above.

Some embodiments of this specification further provide a computer-readable storage medium. The computer-readable storage medium stores a computer program, and the computer program is executed by a processor to implement the interaction method for image processing or the image processing method described above.

The computer-readable medium includes persistent, non-persistent, movable, and unmovable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information that can be accessed by the computing device. As specified in this specification, the computer-readable medium does not include transitory computer-readable media (transitory media), such as a modulated data signal and carrier.

It should be further noted that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ... " does not preclude the existence of additional identical elements in the process, method, product, or device that includes the element.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular sequence or sequential sequence shown to achieve the desired result. In some implementations, multi-tasking and concurrent processing are feasible or may be advantageous.

User information (including but not limited to user equipment information, user personal information, etc.) and data (including but not limited to data used for analysis, stored data, displayed data, etc.) used in this application are information and data that are authorized by users or that are fully authorized by all parties, and related data need to be collected, used, and processed in compliance with relevant laws, regulations, and standards of relevant countries and regions, and corresponding operation entries are provided for users to choose to authorize or reject.

### EXAMPLES

1. An interaction method for image processing, comprising:
   receiving a stroke added by a user to a displayed first image by using an operable control, wherein the stroke is used to represent a local area that needs to be changed in the first image;
   displaying a prompt corresponding to the stroke, wherein the prompt represents a modification target of the local area; and
   generating a second image based on the prompt, the stroke, and the first image, and displaying the second image, wherein the second image presents the modification target in the local area and is the same as or similar to the first image in a remaining area.
2. The method according to example 1, wherein the displaying a prompt corresponding to the stroke comprises:
   displaying a predicted first prompt, wherein
   the second image is generated based on the first prompt.
3. The method according to example 1, wherein the displaying a prompt corresponding to the stroke comprises:
   displaying a predicted first prompt; and
   displaying a modified second prompt in response to a modification operation performed by the user on the first prompt, wherein
   the second image is generated based on the second prompt.
4. The method according to example 1, wherein the stroke comprises at least one of a first stroke, a second stroke, and a third stroke, the first stroke is used to outline an area contour, the second stroke is used to draw an area in which content needs to be changed, and the third stroke is used to draw an area in which a color needs to be changed, and present a color that needs to be modified to.
5. The method according to example 4, wherein the first image is displayed in a first display interface, and the first display interface further displays a control icon of the operable control, comprising a first control icon corresponding to the first stroke, a second control icon corresponding to the second stroke, and a third control icon corresponding to the third stroke.
6. The method according to example 5, wherein the first display interface further comprises a text box, wherein the text box is used to display the prompt.
7. An image processing method, comprising:
   obtaining editing data input by a user for a first image, wherein the editing data are used to represent a local area that needs to be changed in the first image;
   determining a prompt corresponding to the editing data, wherein the prompt represents a modification target of the local area; and
   generating a second image based on the prompt, the editing data, and the first image, wherein the second image presents the modification target in the local area and is the same as or similar to the first image in a remaining area.
8. The method according to example 7, wherein the determining a prompt corresponding to the editing data comprises:
   inputting the first image and the editing data to a multimodal large model to obtain a predicted prompt for confirmation or modification by the user.
9. The method according to example 7, wherein the generating a second image based on the prompt, the editing data, and the first image comprises:
   generating an edge map based on the first image and the editing data;
   encoding the first image to obtain encoding information of the first image; and
   inputting the edge map, the encoding information, and the prompt to an image generation model, and obtaining the second image based on an output image.
10. The method according to example 9, wherein the generating an edge map based on the first image and the editing data comprises:
   inputting the first image and the editing data to a pre-trained edge extraction model to obtain the edge map, wherein the edge extraction model uses a convolutional neural network (CNN) as a model backbone.
11. The method according to example 9, wherein the encoding the first image to obtain encoding information of the first image comprises:
   extracting a remaining area other than the local area from the first image; and
   encoding the remaining area by using an encoder, to obtain the encoding information of the first image.
12. The method according to example 9, wherein the inputting the edge map, the encoding information, and the prompt to an image generation model comprises:
   inputting the edge map to a first model to obtain first data for performing graphics encoding on the edge map;
   inputting the first data and the encoding information to a second model to obtain second data converted into text embedded space; and
   inputting the second data and the prompt to the image generation model.
13. The method according to example 9, wherein the obtaining the second image based on an output image comprises:
   extracting a first sub-image in the local area from the output image; and
   fusing the first sub-image with a second sub-image in the first image other than the local area, to obtain the second image.
14. An interaction apparatus for image processing, comprising:
   a stroke receiving module, configured to receive a stroke added by a user to a displayed first image by using an operable control, wherein the stroke is used to represent a local area that needs to be changed in the first image;
   a prompt display module, configured to display a prompt corresponding to the stroke, wherein the prompt represents a modification target of the local area; and
   an image display module, configured to generate a second image based on the prompt, the stroke, and the first image, and display the second image, wherein the second image presents the modification target in the local area and is the same as or similar to the first image in a remaining area.
15. An image processing apparatus, comprising:
   an editing data acquisition module, configured to obtain editing data input by a user for a first image, wherein the editing data are used to represent a local area that needs to be changed in the first image;
   a prompt determining module, configured to determine a prompt corresponding to the editing data, wherein the prompt represents a modification target of the local area; and
   an image generation module, configured to generate a second image based on the prompt, the editing data, and the first image, wherein the second image presents the modification target in the local area and is the same as or similar to the first image in a remaining area.
16. A computer program product, wherein the computer program product is executed by a processor to implement the method according to any one of examples 1 to 13.
17. A computer device, comprising:
   a processor; and
   a storage, configured to store processor-executable instructions, wherein
   the processor runs the executable instructions to implement the method according to any one of examples 1 to 13.

## Claims

1. An method for image processing, comprising:
receiving a stroke added by a user to a displayed first image by using an operable control, wherein the stroke is used to represent a local area that needs to be changed in the first image;
displaying a prompt corresponding to the stroke, wherein the prompt represents a modification target of the local area; and
generating a second image based on the prompt, the stroke, and the first image, and displaying the second image, wherein the second image presents the modification target in the local area and is the same as or similar to the first image in a remaining area.

2. The method according to claim 1, wherein displaying a prompt corresponding to the stroke comprises:
displaying a predicted first prompt, wherein
the second image is generated based on the first prompt.

3. The method according to claim 1, wherein displaying a prompt corresponding to the stroke comprises:
displaying a predicted first prompt; and
displaying a modified second prompt in response to a modification operation performed by the user on the first prompt, wherein
the second image is generated based on the second prompt.

4. The method according to claim 1, wherein the stroke comprises at least one of a first stroke, a second stroke, and a third stroke, the first stroke is used to outline an area contour, the second stroke is used to draw an area in which content needs to be changed, and the third stroke is used to draw an area in which a color needs to be changed, and present a color that needs to be modified to.

5. The method according to claim 4, wherein the first image is displayed in a first display interface, and the first display interface further displays a control icon of the operable control, comprising a first control icon corresponding to the first stroke, a second control icon corresponding to the second stroke, and a third control icon corresponding to the third stroke; optionally
wherein the first display interface further comprises a text box, wherein the text box is used to display the prompt.

6. An image processing method, comprising:
obtaining editing data input by a user for a first image, wherein the editing data are used to represent a local area that needs to be changed in the first image;
determining a prompt corresponding to the editing data, wherein the prompt represents a modification target of the local area; and
generating a second image based on the prompt, the editing data, and the first image, wherein the second image presents the modification target in the local area and is the same as or similar to the first image in a remaining area.

7. The method according to claim 6, wherein determining a prompt corresponding to the editing data comprises:
inputting the first image and the editing data to a multimodal large model to obtain a predicted prompt for confirmation or modification by the user.

8. The method according to claim 6, wherein generating a second image based on the prompt, the editing data, and the first image comprises:
generating an edge map based on the first image and the editing data;
encoding the first image to obtain encoding information of the first image; and
inputting the edge map, the encoding information, and the prompt to an image generation model, and obtaining the second image based on an output image.

9. The method according to claim 8, wherein generating an edge map based on the first image and the editing data comprises:
inputting the first image and the editing data to a pre-trained edge extraction model to obtain the edge map, wherein the edge extraction model uses a convolutional neural network, CNN, as a model backbone; and/or
wherein encoding the first image to obtain encoding information of the first image comprises:
extracting a remaining area other than the local area from the first image; and
encoding the remaining area by using an encoder, to obtain the encoding information of the first image.

10. The method according to claim 8, wherein inputting the edge map, the encoding information, and the prompt to an image generation model comprises:
inputting the edge map to a first model to obtain first data for performing graphics encoding on the edge map;
inputting the first data and the encoding information to a second model to obtain second data converted into text embedded space; and
inputting the second data and the prompt to the image generation model.

11. The method according to claim 8, wherein obtaining the second image based on an output image comprises:
extracting a first sub-image in the local area from the output image; and
fusing the first sub-image with a second sub-image in the first image other than the local area, to obtain the second image.

12. An apparatus for image processing, comprising:
a stroke receiving module, configured to receive a stroke added by a user to a displayed first image by using an operable control, wherein the stroke is used to represent a local area that needs to be changed in the first image;
a prompt display module, configured to display a prompt corresponding to the stroke, wherein the prompt represents a modification target of the local area; and
an image display module, configured to generate a second image based on the prompt, the stroke, and the first image, and display the second image, wherein the second image presents the modification target in the local area and is the same as or similar to the first image in a remaining area.

13. An image processing apparatus, comprising:
an editing data acquisition module, configured to obtain editing data input by a user for a first image, wherein the editing data are used to represent a local area that needs to be changed in the first image;
a prompt determining module, configured to determine a prompt corresponding to the editing data, wherein the prompt represents a modification target of the local area; and
an image generation module, configured to generate a second image based on the prompt, the editing data, and the first image, wherein the second image presents the modification target in the local area and is the same as or similar to the first image in a remaining area.

14. A computer program product, wherein the computer program product is executed by a processor to implement the method according to any one of claims 1 to 11.

15. A computer device, comprising:
a processor; and
a storage, configured to store processor-executable instructions, wherein
the processor runs the executable instructions to implement the method according to any one of claims 1 to 11.
